Europäisches Patentamt

European Patent Office

Office européen des brevets

(19)

(11) **EP 1 250 252 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.⁷: **B62D 5/04**, B62D 6/00, F16H 1/28

(21) Anmeldenummer: **00988690.4**

(22) Anmeldetag: **08.12.2000**

(86) Internationale Anmeldenummer:
**PCT/DE00/04367**

(87) Internationale Veröffentlichungsnummer:
**WO 01/049553 (12.07.2001 Gazette 2001/28)**

(54) **STELLGLIED FÜR EINE FAHRZEUG-LENKVORRICHTUNG**

ACTUATOR FOR AN AUTOMOTIVE STEERING DEVICE

ACTIONNEUR POUR UN SYSTEME DE DIRECTION DE VEHICULE

(84) Benannte Vertragsstaaten:
**DE ES FR GB IT SE**

(30) Priorität: **05.01.2000 DE 10000221**

(43) Veröffentlichungstag der Anmeldung:
**23.10.2002 Patentblatt 2002/43**

(73) Patentinhaber: **ROBERT BOSCH GMBH**
**70442 Stuttgart (DE)**

(72) Erfinder:
 • **REIMANN, Gerd**
  **74232 Abstatt (DE)**

 • **BOCK, Michael**
  **81825 München (DE)**
 • **NAGEL, Willi**
  **71686 Remseck/Hochdorf (DE)**
 • **KNECHT, Rolf**
  **71254 Ditzingen (DE)**

(56) Entgegenhaltungen:
 **EP-A- 0 229 958**      **EP-A- 0 317 390**
 **DE-A- 2 359 807**      **DE-A- 3 018 610**
 **DE-A- 3 830 654**      **DE-A- 19 723 358**
 **DE-B- 1 209 391**

EP 1 250 252 B1

## Beschreibung

### Stand der Technik

Die Erfindung geht aus von einem Stellglied zum überlagerten Lenkeingriff in einer Fahrzeug-Lenkvorrichtung der im Oberbegriff des Anspruchs 1 definierten Gattung. Ein solches Stellglied ist in der DE 19 723 358 offenbart.

Mit solchen Stellgliedern wird der Lenkwinkel der Fahrzeugräder unabhängig vom Lenkradwinkel verändert, wodurch Vorteile hinsichtlich Fahrdynamik, Fahrsicherheit und Fahrkomfort erzielt werden.

Bei einem bekannten Stellglied (DE 38 30 654 A1) ist das Überlagerungsgetriebe als einstufiges Planetengetriebe mit Planetenträger, Planetenräder, Sonnenrad und Hohlrad ausgebildet, wobei das Sonnenrad mit der ersten Eingangswelle und das Hohlrad mit der Ausaanoswelle jeweils drehfest verbunden ist und der Planetenträger über ein Schneckengetriebe mit der zweiten Eingangswelle in getrieblicher Verbindung steht. Die erste Eingangswelle ist mit dem Handlenkrad und die Ausgangswelle mit den gelenkten Fahrzeugrädern bzw. damit zwangsgekoppelten Lenkgetriebegliedern antriebsverbunden. Das von einem Elektromotor angetriebene Schneckengetriebe ist selbsthemmend ausgebildet. An den Eingangswellen und an der Ausgangswelle sind Sensoren angeordnet, deren Signale die jeweilige Drehstellung der Welle wiedergeben. Die Signale sind einer Regelvorrichtung zugeführt, welche den an der zweiten Eingangswelle angreifenden Elektromotor steuert.

### Vorteile der Erfindung

Das erfindungsgemäße Stellglied mit den Merkmalen des Anspruchs 1 oder des Anspruchs 14 hat den Vorteil, daß das Überlagerungsgetriebe durch die Schrägverzahnung geräuscharm ist. Gleichzeitig wird verhindert, daß es durch die bei Schrägverzahnung unvermeidlich auftretenden Kraftkomponenten in Achsrichtung zu einem stirnseitigen Anlaufen der Stufenplaneten an dem Plantenträger insbesondere bei Drehrichtungsumkehr kommt. Durch die Kompensation der axialen Kraftkomponenten kann die Lagerung der Stufenplaneten auf dem Planetenträger konstruktiv einfach und kostengünstig durch eine einfache Gleitlagerung bewirkt werden.

Durch die in den weiteren Ansprüchen aufgeführten Maßnahmen sind vorteilhafte Weiterbildungen und Verbesserungen des im Anspruch 1 angegebenen Stellglieds möglich.

Gemäß einer bevorzugten Ausführungsform der Erfindung wird bei gleicher Steigungsrichtung der Schrägungswinkel der beiden Getriebestufen der Schrägungswinkel der einen Getriebestufe festgelegt und der Steigungswinkel der anderen Getriebestufe aus der Beziehung

$$F_{t1} \cdot \tan\beta_1 + F_{t2} \cdot \tan\beta_2 = 0$$

berechnet, wobei $F_{t1}$, $F_{t2}$ die in die beiden Planetenräder des Stufenplaneten eingeleiteten Tangentialkräfte und $\beta_1$, $\beta_2$ die Schrägungswinkel in den beiden Getriebestufen sind.

Gemäß einer vorteilhaften Ausführungsform der Erfindung sind die Durchmesser und damit die Zähnezahl der Planetenräder der Stufenplaneten so festgelegt, daß eine Übersetzung von der ersten Eingangswelle zur Ausgangswelle ins Langsame erfolgt. Dadurch läßt sich bezüglich einer variablen Lenkübersetzung eine sicherheitsfreundliche Regelstrategie realisieren, indem bei höheren Fahrgeschwindigkeiten eine indirekte Lenkübersetzung angestrebt und bei niedrigerer Fahrgeschwindigkeit eine direktere Lenkübersetzung hergestellt wird. Bei höherer Fahrgeschwindigkeit bleibt der Elektromotor ausgeschaltet und die Lenkübersetzung ist durch das Planetengetriebe mechanisch vorgegeben, während bei niederen Fahrgeschwindigkeiten, die unkritisch sind, der Elektromotor Lenkbewegungen zustellt.

Gemäß der Erfindung ist zwischen der zweiten Eingangswelle und dem Planetenträger ein selbsthemmend ausgebildetes Schneckengetriebe mit einer drehfest mit der zweiten Eingangswelle verbundenen Schnecke und einem drehfest mit dem Planetenträger verbundenen Schneckenrad angeordnet. Das Durchmesserverhältnis von Schnecke und Schneckenrad liegt aus Gründen der Massenträgheit und des zur Verfügung stehenden Bauraums bei ca. 1, und mit einem Übersetzungsverhältnis des Schneckengetriebes größer ca. 10 läßt sich Selbsthemmung realisieren. Das Übersetzungsverhältnis des Planetengetriebes ist mit ca. 4 gewählt, so daß sich für den Planetenträger in Hinsicht auf Geräusch und Dynamik unkritische Drehzahlen ergeben. Zwischen Elektromotor und Lenkgetriebe ergibt sich damit insgesamt ein Übersetzungsverhältnis von ca. 40, und diese Gesamtübersetzung ist passend für einen gebräuchlichen, preisgünstigen Elektromotor.

Gemäß einer vorteilhaften Ausführungsform der Erfindung ist der das Schneckenrad tragende Planetenträger über mindestens ein Nadellager auf der Ausgangswelle gelagert. Dieses Nadellager reduziert das bei Durchtrieb von der Ein- zur Ausgangswelle und umgekehrt sich der Lenkbewegung entgegenstellende unerwünschte Reibmoment.

Gemäß einer vorteilhaften Ausführungsform der Erfindung stützt sich die Ausgangswelle an der koaxialen ersten Eingangswelle über ein als Gleitlager ausgebildetes Axiallager ab. Bevorzugt weist dabei das Axiallager eine in der Stirnseite einer der beiden Wellen aufgenommene Kugel und eine an der Stirnseite der anderen Welle angeordnete, punktförmig an der Kugel anliegende Scheibe auf. Die Scheibe wird mittels eines in der Welle verschraubbaren Gewindestifts zugestellt und so das Axialspiel zwischen der Ein- und Ausgangswelle bis auf Null reduziert. Ist axiale Spielfreiheit erreicht, wird dieser Zustand mit Hilfe einer weiteren Schraube gesichert. Durch diese konstruktiven Maßnahmen wird ein einfacher, kostengünstiger Spielausgleich für Bauteiltoleranzen in axialer Richtung erreicht. Da zwischen Kugel und Scheibe nur Punktberührung besteht, ist das auftretende Reibmoment trotz der preisgünstigen Gleitlagerung sehr gering. Zusätzlicher Bauraum in axialer und radialer Richtung wird nicht benötigt. Bezüglich der Abstützung des Planetenträgers über das Nadellager und der Wellen untereinander über das Axiallager können erste Eingangswelle und Ausgangswelle getauscht werden.

Gemäß einer vorteilhaften Ausführungsform der Erfindung stützt sich die Ausgangswelle über mindestens ein Nadellager auf der Eingangswelle ab, die ihrerseits über ein Kugellager gehäuseseitig abgestützt ist. Nadellager und Kugellager liegen dabei konzentrisch zueinander. Sind zwei Nadellager eingebaut, kann die Eingangswelle begrenzt Querkräfte und Biegemomente aufnehmen. Die erste Ausgangswelle ist dann die Welle, die lagerungstechnisch die größte Querkraft bzw. das größte Biegemoment aufnehmen kann. Wird dies berücksichtigt, so kann das Stellglied um 180° gedreht eingebaut werden, wodurch Eingangs- und Ausgangswelle in ihrer Funktionszuordnung vertauscht werden. Die Bestimmung der Wellen hängt davon ab, welche Querkraft bzw. welches Biegemoment erwartungsgemäß in die Wellen eingeleitet wird. Das Stellglied kann dabei sowohl in der Lenksäule als auch im Lenkgetriebe integriert werden, so daß sich mit dem erfindungsgemäßen Stellglied alle auftretenden Belastungsfälle sowohl in der Lenksäule als auch im Lenkgetriebe abdecken lassen.

Gemäß einer bevorzugten Ausführungsform der Erfindung ist der mindestens eine Stufenplanet drehbar auf einer Achse gelagert, deren beide Enden in jeweils einer im Planetenträger angeordneten Lagerstellen aufgenommen sind. Die beiden Lagerstellen der Achse sind auf dem freien Ende je eines Biegearms angeordnet, dessen anderes Ende mit einer auf die mit dem Stufenplaneten kämmenden Sonnenräder hin gerichteten Vorspannung federelastisch am Planetenträger festgelegt ist. Am Planetenträger ist ein eine von den kämmenden Sonnenrädern weggerichtete Bewegung des Biegearms begrenzender Anschlag angeordnet, der eine Zentrierausnehmung mit zwei schrägen Seitenflanken aufweist, an denen das abgerundete freie Ende des Biegearms linienförmig anliegt. Durch diese federnde Ausbildung des Planetenträgers wird eine radiale Spielfreiheit des Planetengetriebes erreicht. Der prismenförmige mechanische Anschlag zentriert die am vorderen Ende des Biegearms angeordnete Lagerstelle, so daß die Lagerstelle nicht durch aus dem Planetengetriebe resultierende Tangentialkräfte noch zusätzlich verschoben wird.

Gemäß einer bevorzugten Ausführungsform der Erfindung ist der Biegearm tangential zum Planetenträger ausgerichtet. Damit befindet sich der Biegearm selbst auf der Wirklinie der Tangentialkräfte, so daß die Tangentialkräfte im Biegearm nur Zug- und Druckkräfte erzeugen, während die Radialkräfte am Biegearm dagegen nur Biegekräfte aufbringen. Hierdurch erfährt die Lagerstelle am vorderen Ende des Biegearms bei der Auslenkung des Biegearms keinen tangentialen Weg, und die Lagerstelle ist tangential sehr steif am Planetenträger angebunden. Die zuvor beschriebene Zentrierausnehmung am Planetenträger könnte damit entfallen oder verstärkt deren Wirkung.

Gemäß einer vorteilhaften Ausführungsform der Erfindung ist jeder der beiden Eingangswellen und der Ausgangswelle ein die Drehwinkel und/oder die Drehwinkelgeschwindigkeit erfassender Sensor zugeordnet, dessen Ausgangssignale einer den Elektromotor steuernden Regelvorrichtung zugeführt sind. Dadurch ergibt sich in Hinblick auf puncto Sicherheit die Möglichkeit der Summenwinkelüberwachung, da die Summe aller drei, von den Sensoren erfaßten Drehwinkel Null betragen muß. Fällt ein Sensor aus, kann die Funktion dieses Sensors von den beiden anderen übernommen werden, da sich der Drehwinkel einer beliebigen Welle aus den Drehwinkeln der beiden übrigen Wellen errechnen läßt.

Insgesamt ergibt die Summe der Weiterbildungen und Verbesserungen der Erfindung ein technisch optimiertes, marktfähiges Stellglied zum überlagerten Lenkeingriff.

Zeichnung

Die Erfindung ist anhand von in der Zeichnung dargestellten Ausführungsbeispielen in der nachfolgenden Beschreibung näher erläutert. Es zeigen:

Fig. 1    einen Langsschnitt eines Stellglieds zum überlagerten Lenkeingriff in einer Fahrzeug-Lenkvorrichtung,

Fig. 2    eine Prinzipskizze eines Überlagerungsgetriebes im Stellglied gemäß Fig. 1,

Fig. 3    eine Prinzipskizze des Überlagerungsgetriebes gemäß einem weiteren Ausführungsbeispiel,

Fig. 4    eine vergrößerte Ansicht eines Stufenplaneten im Überlagerungsgetriebe gemäß Fig. 1,

Fig. 5    eine Draufsicht der Ebene IV-IV eines Planetenträgers im Überlagerungsgetriebe gemäß Fig. 1,

Fig. 6    eine gleiche Darstellung wie in Fig. 5 gemäß einem weiteren Ausführungsbeispiel des Planetenträgers.

Beschreibung der Ausführungsbeispiele

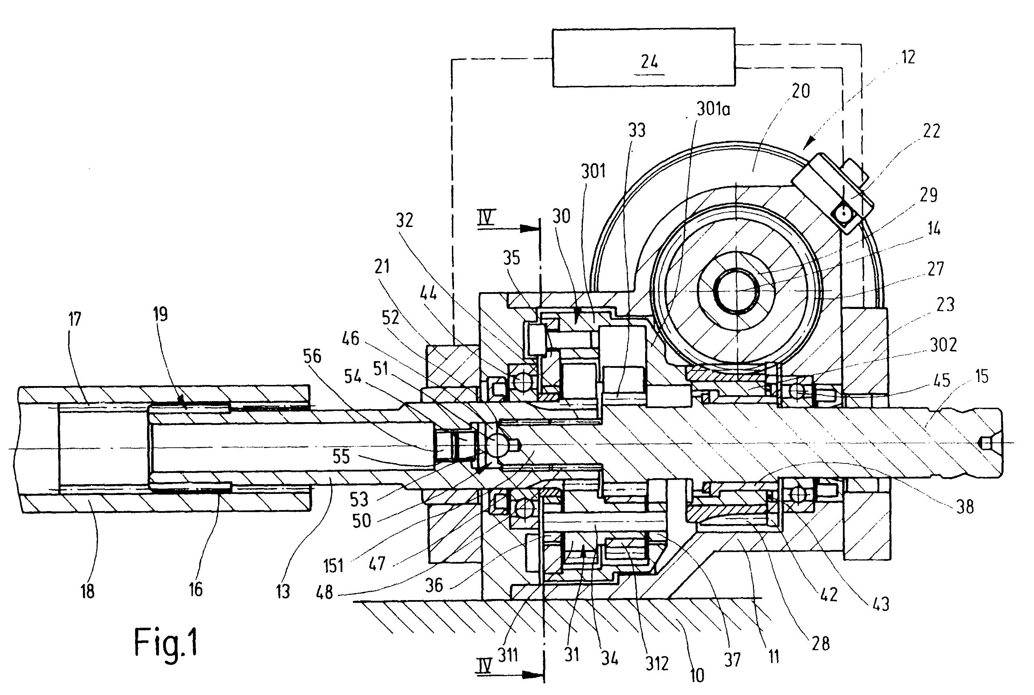

Das in Fig. 1 dargestellte Stellglied zum überlagerten Lenkeingriff in einer Fahrzeug-Lenkvorrichtung stellt eine typische Ausführungsform für den Einbau in der Lenksäule des Fahrzeugs dar und ist mit einem Stellergehäuse 11 über den in Fig. 1 schematisch angedeuteten Lenksäulenträger 10 fest mit der Karosserie verbunden. Das Stellglied weist ein in einem Stellergehäuse 11 aufgenommenes Überlagerungsgetriebe 12 mit zwei Eingangswellen 13,14 und einer Ausgangswelle 15 auf, bei dem das Übersetzungsverhältnis zwischen einer Änderung des Drehwinkels der ersten Eingangswelle 13 und der Änderung des Drehwinkels an der mit der ersten Eingangswelle 13 koaxialen Ausgangswelle 15 durch einen mit der zweiten Eingangswelle gekoppelten Elektromotor 20 in Abhängigkeit von vorgegebenen Parametern, z.B. der Drehgeschwindigkeit der ersten Eingangswelle 13, veränderbar ist. Die erste Eingangswelle 13 ist am Wellenende mit einer Außenkerbverzahnung 16 versehen, in die eine an einem Mantelrohr 18 ausgebildete Innenkerbverzahnung 17 eingreift. Das Mantelrohr 18 steht in direkter Verbindung mit dem hier nicht dargestellten Handlenkrad. Eine Verschiebenabe 19 erlaubt eine axiale Verschiebung des Handlenkrads und überträgt das Handmoment spielfrei auf die erste Eingangswelle 13. Sie ermöglicht eine Längseinstellbarkeit des Handlenkrads und erlaubt das Wegtauchen des Handlenkrads im Crashfall. Die zweite Eingangswelle 14 ist die Antriebswelle des Elektromotors 20. Jeder Eingangswelle 13,14 und der Ausgangswelle 15 ist ein den Drehwinkel und/oder die Drehwinkelgeschwindigkeit der Welle erfassender Sensor 21,22,23 zugeordnet. Die Meßsignale der Sensoren 21 - 23 werden an eine Regelvorrichtung 24 weitergeleitet, die den Elektromotor 20 steuert. Weitere Meßgrößen, wie Fahrgeschwindigkeit, Gierrate u.dgl., werden ebenfalls in der Regelvorrichtung 24 ausgewertet.

Das Überlagerungsgetriebe 12 weist ein zweistufiges, modifiziertes Planetengetriebe 25 mit einem Übersetzungsverhältnis vom Planetenträger 30 zur Ausgangswelle sowie ein selbsthemmendes Schneckengetriebe 26 auf, über das das Planetengetriebe 25 von dem Elektromotor 20 angetrieben wird. Selbsthemmung bedeutet, daß nur der Elektromotor 20 das Planetengetriebe 25 antreiben Kann und nicht umgekehrt. Das Übersetzungsverhältnis liegt zwischen 2 bis 8 und ist im Ausführungsbeispiel mit ca. 4 gewählt. Das Schneckengetriebe 26 besteht aus einer Schnecke 27 aus Kunststoff, die entweder direkt auf die zweite Eingangswelle 14 oder auf eine Metallhüise 29 gespritzt ist, die ihrerseits auf die zweite Eingangswelle 14 gepreßt ist. Das Durchmesserverhältnis von Schnecke 27 zu Schneckenrad 28 ist ca. 1 und das Übersetzungsverhältnis des Schneckengetriebes 26 größer ca. 10 gewählt. Das Schneckenrad 28 sitzt auf einem Planetenträger 30 des noch zu beschreibenden Planetengetriebes 25 und bildet mit diesem eine Baueinheit. Dabei sind Schneckenrad 28 und Planetenträger 30 als ein Spritzgußteil aus einem Werkstoff, z.B. Aluminium oder Kunststoff, gefertigt. Kunststoff hat den Vorteil, daß das Schneckenrad 28 mit dem Spritzprozeß fertiggestellt ist, preisgünstig ist und geräuschdämpfende Eigenschaften aufweist. Alternativ kann der Planetenträger 30 z.B. aus Aluminium und das Schneckenrad 28 aus Kunststoff gefertigt sein. Neben den bereits genannten Vorteilen ergibt sich dadurch eine höhere Festigkeit, eine höhere Elastizität und eine geringere Wärmeausdehnung des Plantenträgers 30 gegenüber einem Kunststoff-Planetenträger.

Das zweistufige Planetengetriebe 25 weist neben dem Planetenträger 30 drei im Planetenträger 30 drehend gelagerte Stufenplaneten 31, die auf einem zur Achse des Planetenträgers 30 koaxialen Teilerkreis um gleiche Drehwinkel zueinander versetzt sind, sowie zwei Sonnenräder 32,33 auf. Jeder Stufenplanet 31 besteht aus einem Planetenrad 311 und einem Planetenrad 312, die drehfest miteinander verbunden sind. Die Planetenräder 311 und 312 weisen unterschiedliche Durchmesser und damit unterschiedliche Zähnezahlen auf. Jeder Stufenplanet 31 sitzt gleitgelagert auf einer Achse 34 innerhalb eines Topfteils 301 des Planetenträgers 30, das mit einer Deckelplatte 35 verschlossen ist. Die Achsen 34 sind mit ihren Achsenden jeweils in einer im Topfboden 301a des Topfteils 301 ausgebildeten Lagerstelle 36 und in einer in der Deckelplatte 35 ausgebildeten Lagerstelle 37 drehfest aufgenommen. Vom Topfteil 301 setzt sich ein einstückiges Hülsenteil 302 des Planetenträgers 30 fort, das über ein Gleitlager 38 auf der Ausgangswelle 15 drehgelagert ist und das bereits erwähnte Schneckenrad 28 des Schneckengetriebes 26 trägt. Zur Reduzierung eines unerwünschten Reibmoments bei Durchtrieb von der ersten Ein- zur Ausgangswelle 13,15 und umgekehrt wird das Gleitlager 38 durch ein hier nicht dargestelltes Nadellager ersetzt oder ergänzt. Die Planetenräder 311 der Stufenplaneten 31 kämmen mit dem Sonnenrad 32 und die Planetenräder 312 kämmen mit dem Sonnenrad 33. Die Sonneräder 32 und 33 sind direkt auf die erste Eingangswelle 13 bzw. die Ausgangswelle 15 gefräst.

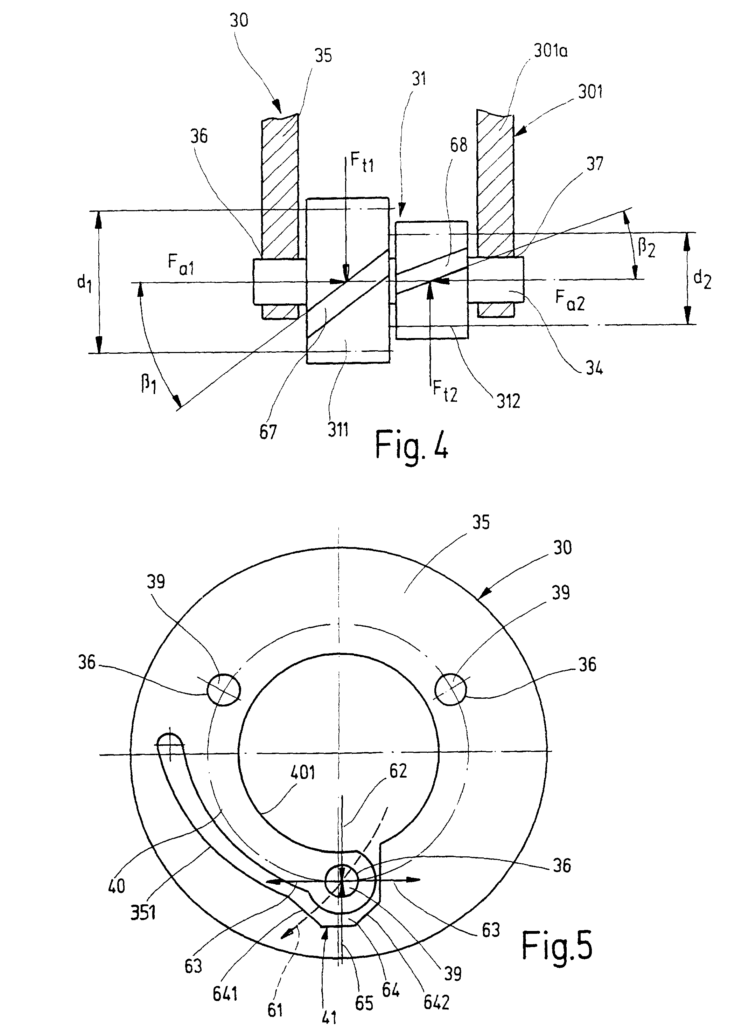

Um Spielfreiheit zwischen der ersten Eingangswelle 13 und der Ausgangswelle 15 des Überlagerungsgetriebes 12 herzustellen, sind im Planetengetriebe 25 Mittel zur Unterdrückung eines zwischen den Stufenplaneten 31 und den beiden Sonnerädern 32,33 vorhandenen Zahnflankenspiels vorgesehen. Diese Mittel umfassen eine radial federnde Lagerung mindestens eines der Stufenplaneten 31 im Planetenträger 30, was durch eine radial federnde Ausbildung der Lagerstellen 36 und 37 dieses Stufenplaneten 31 im Planetenträger 30 bewirkt wird. In Fig. 5 ist die federnde Ausbildung der Lagerstelle 36 für den einen Stufenplaneten 31 in der Deckelplatte 35 des Planetenträgers 35 vergrößert dargestellt. Die federnde Lagerstelle 36 ist als Bohrung 39 auf einem Biegearm 40 ausgebildet, der an der Deckelplatte 35 federelastisch festgelegt ist. Der Biegearm 40 ist dabei so ausgebildet, daß er bei montiertem Planetengetriebe 25 eine zu den kämmenden Sonnenrädern 32, 33 hin gerichtete, annähernd radiale Spannkraft erzeugt. Diese Spannkraft wird dadurch hergestellt, daß der Biegearm 40 beim Montieren der Stufsnplaneten 31 in Gegenrichtung weg von den kämmenden Sonnenrädern 32,33 gedrückt wird. Der Biegearm 40 ist bogenförmig mit einer zur Achse des Planetenträgers 30 konzentrisch verlaufenden, inneren Begrenzungskante 401 ausgebildet, und zwar dadurch, daß er aus der Deckelplatte 35 in der Weise freigeschnitten ist, daß das eine Armende einstückig mit der Deckelplatte 35 verbunden bleibt und das andere Armende bogenförmig abgerundet ist. In diesem bogenförmig abgerundeten Armende ist die Lagerstelle 36 als Bohrung 39 aufgenommen. Bei Überlast legt sich der Biegearm 40 an einem an der Deckelplatte 35 ausgebildeten Anschlag 41 an. Dieser Anschlag 41 ist von dem vorderen Teil der Freischnittkante 351 der Deckelplatte 35 gebildet, die im Spaltabstand von dem Biegearm 40 verläuft. Wird der Biegearm 40 bei Überlast nach außen gedrückt, bewegt sich die Lagerstelle 36 entlang einer Kurve 61, bis sie an dem mechanischen Anschlag 41 zur Anlage kommt. Außer der der Federkraft 65 des Biegearms 40 entgegengerichteten Radialkraft 62 resultiert aus dem Planetengetriebe 25 auch noch die Tangentialkraft 63. Diese Kraft hat das Bestreben, die Lagerstelle 36 mit Biegearm 40 tangential zu verschieben, was für das Planetengetriebe 25 wenig vorteilhaft ist. Wie in Fig. 5 zu sehen ist, weist daher der Anschlag 41 eine prismenförmige Zentrierausnehmung 64 mit zwei schrägen Seitenflanken 641 und 642 auf. Kommt das vordere bogenförmige Armende des Biegearms 40 mit der Lagerstelle 36 zur Anlage an dem mechanischen Anschlag 41, so wird die Lagerstelle über die beiden Seitenflanken 641,642 der Zentrierausnehmung 64 festgelegt. Die Lagerstelle 36 ist damit radial und tangential fixiert und somit die Endlage des Stufenplaneten 31 im Flanetengetriebe 25 definiert. Die einwandfreie Funktion des Planetengetriebes 25 ist damit unter allen Lastfällen sichergestellt.

In gleicher Weise wie zu der Lagerstelle 36 beschrieben, ist die Lagerstelle 37 der Achse 34 des Stufenplaneten 31 im Topfboden 301a des Topfteils 301 des Planetenträgers 30 ausgebildet. Insofern gilt die vorstehende Beschreibung in identischer Weise, wobei lediglich anstelle der Lagerstelle 36 die Lagerstelle 37 und anstelle der Deckelplatte 35 der Topfboden 301a gesetzt werden muß.

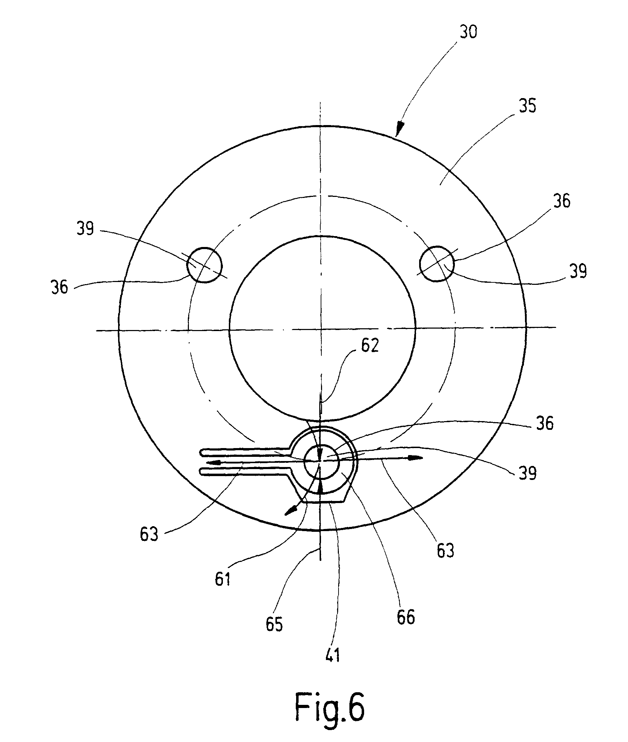

Fig. 6 zeigt eine modifizierte Ausführung des Biegearms 66 zur radial federnden Lagerung der Lagerstelle 36 bzw. 37. Wie in Fig. 5 greift auch hier die Radialkraft 62 und die Tangentialkraft 63 an der Lagerstelle 36 an. Der Biegearm 66 ist geradlinig ausgeführt und tangential zum Planetenträger 30 ausgerichtet. Er liegt damit auf der Wirklinie der Tangentialkräfte 63, wodurch die Tangentialkräfte 63 im Biegearm 66 nur Zug- und Druckkräfte, die Radialkraft 62 hingegen, der die Federkraft 65 des Biegearms 66 entgegenwirkt, ausschließlich eine Biegearmbeanspruchung um die Anbindung des Biegearms 66 an dem Planetenträger 30 erzeugt. Die Lagerstelle 36 bewegt sich federnd entlang der Kurve 61 im Bereich des möglichen Federwegs radial nach außen. Im Gegensatz zum Biegearm 40 in Fig. 5 macht der Biegearm 66 keinen tangentialen Weg.

Ebenso wie das Planetengetriebe 25 ist auch das Schneckengetriebe 26 spielfrei ausgebildet. Hierzu ist ein zweites, schmales Schneckenrad 42 über eine Ringfeder 43 mit dem ersten Schneckenrad 28 gekoppelt. Die Ringfeder 43 sorgt für tangentialen Spielausgleich, indem sie mit Federkraft jeweils eine Zahnflanke der Schneckenräder 28 und 42 beidseitig an die Zahnflanken der Schnecke 27 anlegt.

Die erste Eingangswelle 13 und die Ausgangswelle 15 sind jeweils über ein Kugellager 44 bzw. 45 im Stellergehäuse 11 gelagert. Zusätzlich ragt die Ausgangswelle 15 mit einem an ihrem einen Stirnende vorstehenden Lagerzapfen 151 in eine sacklochartige, koaxiale Ausnehmung 46 in der ersten Eingangswelle 13 hinein, und die Ausgangswelle 15 stützt sich mit ihrem Lagerzapfen 151 über zwei Nadellager 47,48 in der Ausnehmung 46 auf der ersten Eingangswelle 13 ab. Das Nadellager 47 liegt dabei unmittelbar innerhalb des vom Kugellager 44 umschlossenen Ringbereichs. Über diese Nadellager 47,48 werden Querkräfte bzw. Biegemomente, die über das Mantelrohr 18 in die erste Eingangswelle 13 eingeleitet werden, abgestützt. Ist die Einleitung einer Querkraft oder eines Biegemoments konstruktionsbedingt ausgeschlossen, kann das Nadellager 48 entfallen.

Zwischen der ersten Eingangswelle 13 und der damit koaxialen Ausgangswelle 15 ist ein axialer Spielausgleich vorgesehen. Hierzu ist zwischen der ersten Eingangswelle 13 und der Ausgangswelle 15, bzw. dem Lagerzapfen 151 der Ausgangswelle 15, ein als Gleitlager ausgebildetes Axiallager 50 angeordnet. Das Axiallager 50 umfaßt eine Kugel 51, die in einer stirnseitigen Vertiefung 52 in der Stirnseite des Lagerzapfens 151 der Ausgancswelle 15 aufgenommen ist, und eine Scheibe 53, die im Grunde der Ausnehmung 46 in der ersten Eingangswelle 13 eingelegt ist. Die Scheibe 53 ist axial verschieblich in der Ausnehmung 46 aufgenommen und liegt an der Stirnseite eines Gewindestiftes 54 an, der in einer Innengewindebohrung 55 in der ersten Eingangswelle 13 verschraubt ist. Wird der Gewindestift 54 zugestellt, so verringert sich das Axialspiel zwischen der ersten Eingangswelle 13 und der Ausgangswelle 15, und die Kugel 51 liegt punktförmig an der Scheibe 53 an. Ist die Spielfreiheit erreicht, wird dieser Zustand mit Hilfe einer Sicherungsschraube 56, die ebenfalls in der Innengewindebohrung 55 verschraubbar ist, gesichert. Gewindestift 54 und Sicherungsschraube 56 sind von dem freien Ende der hohl ausgebildeten ersten Eingangswelle 13 aus zugänglich.

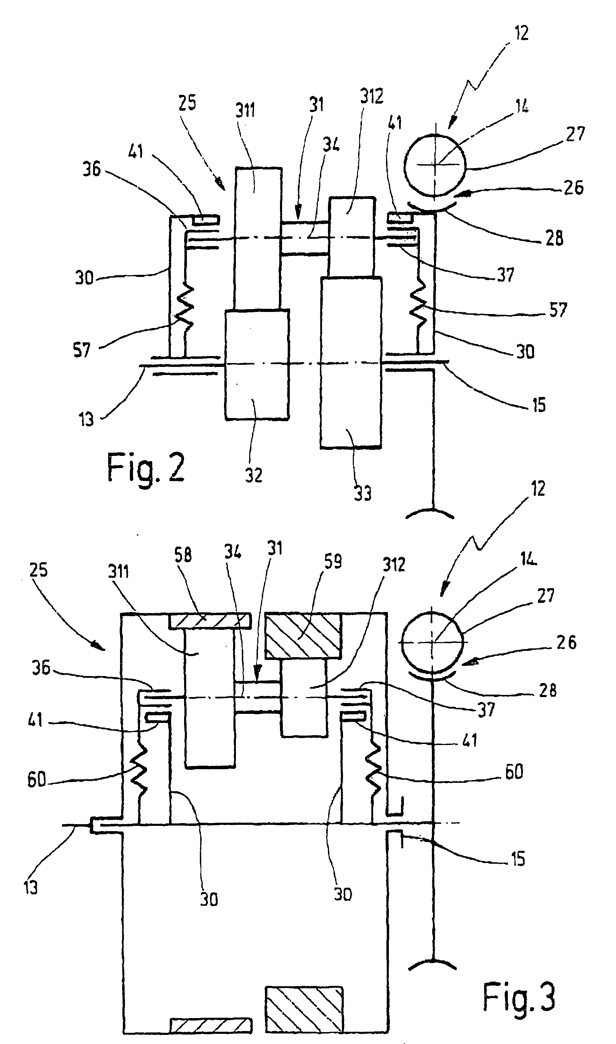

In Fig. 2 ist zur Verdeutlichung des radialen Spielausgleichs in dem beschriebenen Planetengetriebe 25 das Überlagerungsgetriebe 12 noch einmal schematisiert dargestellt. In Übereinstimmung mit Fig. 1 ist die erste Eingangswelle mit 13, die zweite Eingangswelle mit 14 und die Ausgangswelle mit 15 bezeichnet. Das Sonnenrad 32 sitzt drehfest auf der ersten Eingangswelle 13 und das Sonnenrad 33 drehfest auf der Ausgangswelle 15. Das Schneckenrad 28 des Schneckengetriebes 26 ist drehfest mit dem Planetentrager 30 verbunden, der drehbar im Stellergehäuse 11 gelagert ist, im Ausführunasbeispiel der Fig. 2 sich drehbar auf der Ausgangswelle 15 über ein Nadellager und auf der Eingangswelle 13 abstützt. Das Sonnenrad 32 kämmt mit dem Planetenrad 311 des Stufenplaneten 31, und das Sonnenrad 33 kämmt mit dem Planetenrad 312 des Stufenplaneten 31, wobei die Planetenräder 311,312 drehfest miteinander verbunden sind und - wie bereits beschrieben - über ein Gleitlager drehend auf einer Achse 34 aufgenommen sind. Die in Fig. 2 dargestellte Achse 34 des einen Stufenplaneten 31 ist radial federnd im Planetenträger 30 gelagert. Hierzu sind die Lagerstellen 36,37, die die beiden Achsenden der Achse 34 aufnehmen, radial federnd im Planetenträger 30 angebunden, was durch die Zugfedern 57 in Fig,. 2 symbolisiert ist. Die Zugfedern 57 erzeugen eine zu den Sonnenrädern 32,33 hin gerichtete radiale Spannkraft. Die die radiale Auslenkung nach außen bei Überlast begrenzenden mechanischen Anschläge, die in dem Planetenträger 30 integriert sind, sind in Fig. 2 ebenfalls mit 41 bezeichnet.

Wie in Fig. 3 dargestellt ist, kann dieses zweistufige Planetengetriebe 25 alternativ auch dadurch realisiert werden, daß anstelle der zwei Sonnenräder 32,33 zwei Hohlräder 58,59 mit den Stufenplaneten 31 kämmen, wobei das Hohlrad 58 dem Planetenrad 311 und das Hohlrad 59 dem Planetenrad 312 zugeordnet ist. Das Hohlrad 58 ist drehfest mit der ersten Eingangswelle 13 und das Hohlrad 59 ist drehfest mit der Ausgangswelle 15 verbunden. Zum radialen Spielausgleich ist wiederum ein Stufenplanet 31 radial federnd gelagert, und zwar derart, daß die Radtalkraft nach außen wirkt und die Planetenräder 311,312 in die zugeordneten Hohlräder 58,59 kraftschlüssig einschiebt. Hierzu sind wiederum die Lagerstellen 36,37, der den Stufenplanet 31 drehbeweglich aufnehmenden Achse 34 radial verschieblich im Planetenträger 30 gelagert, wobei die Radialkraft nach außen wirkt und in Fig. 3 durch Druckfedern 60,61 symbolisiert ist. Dieses Planetengetriebe 25 hat ebenfalls radiale Spielfreiheit, doch ist es insoweit nachteilig gegenüber dem Planetengetriebe in Fig. 1 und 2 als durch die Hohlräder 58,59 der Durchmesser des Stellglieds zunimmt und zudem die teueren metallischen Hohlräder 58, 59 die Fertigungskosten erhöhen.

Zur Erzielung einer großen Geräuscharmut des Überlagerungsgetriebes sind die Zähne der Planetenräder 311 und 312 der Stufenplaneten 31 und der mit diesen in jeder Getriebestufe kämmenden Sonnenräder 32,33 bzw. Hohlräder 58,59 geschrägt, wobei die Schrägungswinkel der Zähne in den beiden Getriebestufen so aufeinander abgestimmt sind, daß die von den Sonnenrädern 32,33 bzw. Hohlrädern 58,59 eingeleiteten Tangentialkräfte axiale Kraftkomponenten erzeugen, die sich gegenseitig kompensieren. Dieser Schrägverzahnung mit Axialkraft-Kompensation ist in Fig. 4 für einen Stufenplaneten 31 dargestellt, der - wie beschrieben - auf der im Planetenträger 30 gehaltenen Achse 34 gleitgelagert ist. Die Achse 34 ist mit ihren Enden in der Lagerstelle 36 in der Deckelplatte 35 und in der Lagerstelle 37 im Topfboden 301a des Topfteils 301 des Planetenträgers 30 aufgenommen. Mit 67 ist ein Zahn des Planetenrads 311 und mit 68 ein Zahn des Planetenrads 312 bezeichnet. $F_{t1}$ und $F_{t2}$ sind Tangentialkräfte, die jeweils von den in Fig. 4 nicht dargestellten Sonnenrädern 32,33 eingeleitet werden. Die daraus resultierenden Axialkräfte sind $F_{a1}$ und $F_{a2}$. Die Teilkreise $d_1$ und $d_2$ des Stufenplaneten 31 sind aufgrund der gewählten Planetengetriebeübersetzung vorgegeben. Die Schrägungswinkel $\beta_1$ und $\beta_2$ sind nunmehr so gewählt, daß die Summe der Axialkräfte $F_{a1}$ und $F_{a2}$ Null ist. Bei gleicher

Steigungsrichtung der Zähne 67 und 68 gilt die Beziehung

$$F_{t1} \cdot \tan\beta_1 + F_{t2} \cdot \tan\beta_2 = 0.$$

Wird ein Schrägungswinkel $\beta_1$ oder $\beta_2$ vorgegeben, so läßt sich aus dieser Beziehung der zweite Schrägungswinkel $\beta_2$ bzw. $\beta_1$ berechnen. Die Teilkreise $d_1$ und $d_2$ und damit die Zähnezahl der Planetenräder 311 und 312 sind so gewählt, daß eine Übersetzung von der ersten Eingangswelle 13 zur Ausgangswelle 15 vorzugsweise ins Langsame erfolgt. Eine umgekehrte Übersetzung ist möglich, wenn diese auch Nachteile mit sich bringt.

**Patentansprüche**

1. Stellglied zum überlagerten Lenkeingriff in einer Fahrzeug-Lenkvorrichtung, mit einem zwei Eingangswellen (13, 14) und eine Ausgangswelle (15) aufweisenden Überlagerungsgetriebe (12), bei dem das Übertragungsverhältnis zwischen einer Änderung des Drehwinkels an der ersten Eingangswelle (13) und der Änderung des Drehwinkels an der mit der ersten Eingangswelle (13) koaxialen Ausgangswelle (15) durch einen mit der zweiten Eingangswelle (14) gekoppelten Elektromotor (20) in Abhängigkeit von vorgegebenen Parametern, z. B. Drehgeschwindigkeit der ersten Eingangswelle (13), veränderbar ist, wobei das Überlagerungsgetriebe (12) ein zweistufiges, modifiziertes Planetengetriebe (25) mit einem Planetenträger (30), mit mindestens einem, vorzugsweise mindestens drei, Stufenplaneten (31), der aus zwei axial fluchtenden, drehfest miteinander verbundenen Planetenrädern(311, 312) besteht und drehbar am Planetenträger (30) gehalten ist, und mit zwei Sonnenrädern (32, 33) aufweist, jeweils das eine Planetenrad (311) des mindestens einen Stufenplaneten(31) mit der einen Sonnenrad (32) und das andere Planetenrad (312) des Stufenplaneten (31) mit dem anderen Sonnenrad (33) kämmt, die erste Eingangswelle (13) mit dem einen und die Ausgangswelle (15) mit dem anderen Sonnenrad (32, 33) jeweils drehfest verbunden ist und der Planetenträger (30) über die zweite Eingangswelle antreibbar ist, **dadurch gekennzeichnet, dass** die Zähne (67, 68) der Planetenräder (311, 312) der Stufenplaneten (31) und der mit diesen in jeder Getriebestufe kämmenden Sonnenräder (22, 23) geschrägt und die Schrägungswinkel ($\beta_1$, $\beta_2$) der Zähne (67, 68) in den beiden Getriebestufen so aufeinander abgestimmt sind, dass die von den Sonnenrädern (32, 33) in die Planetenräder (311, 312) eingeleiteten Tangentialkräfte ($F_{t1}$, $F_{t2}$) axiale Kraftkomponenten ($F_{a1}$, $F_{a2}$) erzeugen, die sich gegenseitig kompensieren, dass zwischen zweiter Eingangswelle (14) und Planetenträger (30) ein selbsthemmendes Schneckengetriebe (26) mit einer drehfest mit der zweiten Eingangswelle (14) verbundenen Schnecke (27) und einem drehfest mit dem Planetenträger (30) verbundenen Schneckenrad (28) angeordnet ist und dass das Übersetzungsverhältnis des Schneckengetriebes (26) größer als ca. 10 sowie das Übersetzungsverhältnis des Planetengetriebes (25) vom Planetenträger (30) zur Ausgangswelle (15) zwischen 2 bis 8 gewählt ist.

2. Stellglied nach Anspruch 1, **dadurch gekennzeichnet, dass** die Schrägungswinkel ($\beta_1$, $\beta_2$) der beiden Getriebestufen gleiche Steigungsrichtung aufweisen und der Schrägungswinkel (($\beta_1$ bzw. $\beta_2$) der einen Getriebestufe festgelegt und der Schrägungswinkel (($\beta_2$, $\beta_1$) der anderen Getriebestufe aus der Beziehung

$$F_{t1} \cdot \tan \beta_1 + F_{t2} \cdot \tan \beta_2 = 0$$

berechnet wird, wobei $F_{t1}$, $F_{t2}$ die in die beiden Planetenräder (311, 312) eingeleiteten Tangentialkräfte und $\beta_1$, $\beta_2$ die Schrägungswinkel in den beiden Getriebestufen sind.

3. Stellglied nach Anspruch 1 oder 2, **dadurch gekennzeichnet ,dass** die Zähnezahl der Planetenräder (311, 312) so festgelegt ist, dass eine Übersetzung von der ersten Eingangswelle (13) zur Ausgangswelle (15) vorzugsweise ins Langsame erfolgt.

4. Stellglied nach einem der Ansprüche 1 - 3 **dadurch gekennzeichnet, dass** das Durchmesserverhältnis von Schnecke (26) und Schneckenrad (28) ungefähr 1 gewählt ist.

5. Stellglied nach Anspruch 4, **dadurch gekennzeichnet, dass** der Planetenträger (30) über ein Nadellager auf der Ausgangswelle (15) gelagert ist.

6. Stellglied nach einem der Ansprüche 1 bis 5, **dadurch gekennzeichnet, dass** die Ausgangswelle (15) sich an der koaxialen ersten Eingangswelle (13) über ein vorzugsweise als Gleitlager ausgebildetes Axiallager (50) abstützt.

7. Stellglied nach Anspruch 6, **dadurch gekennzeichnet ,dass** das Axiallager (50) eine in der Stirnseite einer Welle (13, 15) aufgenommene Kugel (51) und eine an der Stirnseite der anderen Welle (15, 13) angeordnete, punktförmig an der Kugel (51) anliegende Scheibe (53) aufweist.

8. Stellglied nach Anspruch 7, **dadurch gekennzeichnet, dass** die Ausgangswelle (15) mit einem stirnseitig vorstehenden Lagerzapfen (151) in eine koaxiale, sacklochartige Ausnehmung (46) in der ersten Eingangswelle (13) hineinragt, dass die Kugel (51) in einer im Lagerzapfen (151) der Ausgangswelle (15) ausgebildeten Vertiefung (52) und die Scheibe (53) axial verschieblich in der Ausnehmung (46) der ersten Eingangswelle (13) aufgenommen ist und sich an einem der in der Eingangswelle (13) verschraubbaren Gewindestift (54) abstützt und dass der Gewindestift (54) in jeder Verschiebestellung der Scheibe (53) gegen weitere Verschiebung blockierbar ist.

9. Stellglied nach Anspruch 8, **dadurch gekennzeichnet, dass** die Ausgangswelle (15) sich mit ihrem Lagerzapfen (151) über mindestens ein Nadellager (47, 48) im innern der ersten Eingangswelle (13) abstützt, die ihrerseits über ein Kugellager (44) gehäuseseitig abgestützt ist.

10. Stellglied nach einem der Ansprüche 1 bis 9, **dadurch gekennzeichnet, dass** der mindestens eine Stufenplanet (31) auf einer Achse (34) gelagert ist, deren beiden Enden in jeweils einer im Planetenträger (30) angeordneten Lagerstelle (36, 37) aufgenommen sind, dass die beiden Lagerstellen (36, 37) der Achse (34) auf dem freien Ende je eines Biegearms (40; 66) angeordnet sind, dessen anderes Ende mit einer auf die mit dem Stufenplaneten (31) kämmenden Sonneräder (32, 33) hin gerichteten Vorspannung federelastisch am Planetenträger (30) festgelegt ist, und dass am Planetenträger (30) ein eine von den kämmenden Sonnenrädern (32, 33) weggerichtete Bewegung des Biegearms (40, 66) begrenzender, mechanischer Anschlag (41) angeordnet ist.

**11.** Stellglied nach Anspruch 10, **dadurch gekennzeichnet, dass** der Biegearm (40) bogenförmig mit einer zur Achse des Planetenträgers (30) koaxial verlaufenden, inneren Begrenzungskante (401) ausgebildet ist und dass der Anschlag (41) eine Zentrierausnehmung (64) mit zwei schrägen Seitenflanken (641, 642) aufweist, an denen das abgerundete freie Ende des Biegearms (40) linienförmig anliegt.

**12.** Stellglied nach Anspruch 10, **dadurch gekennzeichnet, dass** der Biegearm (66) tangential zum Planetenträger (30) ausgerichtet ist.

**13.** Stellglied nach einem der Ansprüche 1 bis 12, **dadurch gekennzeichnet, dass** mindestens drei Stufenplaneten (31) um gleiche Umfangswinkel zueinander versetzt am Planetenträger (30) angeordnet sind, von denen mindestens einer die radial federnde Lagerung aufweist.

**14.** Stellglied nach einem der Ansprüche 1 bis 13, bei welchem anstelle der beiden Sonnenräder (32, 33) zwei Hohlräder (58, 59) mit Innenverzahnung drehfest mit der Ein- und Ausgangswelle (13, 15) verbunden sind und in gleicher Weise mit den Planetenrädern (311, 312) des mindestens einen Stufenplaneten (31) kämmen.

**15.** Stellglied nach einem der Ansprüche 1 bis 14, **dadurch gekennzeichnet, dass** jeder der beiden Eingangswellen (13, 14) und der Ausgangswelle (15) eine den Drehwinkel oder die Drehwinkelgeschwindigkeit der Welle (13, 14, 15) erfassender Sensor (21, 22, 23) zugeordnet ist, deren Ausgangssignale einer Regelvorrichtung (24) für den Elektromotor (20) zugeführt sind.

**Claims**

**1.** Actuator for superimposed steering intervention in a vehicle steering apparatus, with a variable-ratio gear unit (12) which has two input shafts (13, 14) and one output shaft (15) and in which the transmission ratio between a change in the angle of rotation at the first input shaft (13) and the change in the angle of rotation at the output shaft (15) which is coaxial with the first input shaft (13) can be changed by an electric motor (20), coupled to the second input shaft (14), as a function of predetermined parameters, e.g. the rotational speed of the first input shaft (13), the variable-ratio gear unit (12) having a two-stage, modified planetary gear mechanism (25) with a planetary carrier (30), with at least one multi-step planet (31) and preferably at least three multi-step planets (31), which multi-step planet (31) is rotatably held on the planetary carrier (30) and comprises two axially aligned planetary wheels (311, 312) which are securely connected to one another so as to rotate together, and with two sun wheels (32, 33), in each case one planetary wheel (311) of the at least one multi-step planet (31) meshing with one sun wheel (32) and the other planetary wheel (312) of the multi-step planet (31) meshing with the other sun wheel (33), the first input shaft (13) being securely connected to one sun wheel (32) and the output shaft (15) being securely connected to the other sun wheel (33) so as to rotate with the respective sun wheel, and it being possible to drive the planetary carrier (30) via the second input shaft, **characterized in that** the teeth (67, 68) of the planetary wheels (311, 312) of the multi-step planets (31) and of the sun wheels (22, 23) meshing with the latter in each gear stage are bevelled and the bevel angles ($\beta_1$, $\beta_2$) of the teeth (67, 68) in the two gear stages are matched to one another in such a way that the tangential forces ($F_{t1}$, $F_{t2}$) applied to the planetary wheels (311, 312) by the sun wheels (32, 33) produce axial force components ($F_{a1}$, $F_{a2}$) which compensate each other, **in that** a self-locking worm gear mechanism (26) having a worm (27) securely connected to the second input shaft (14) so as to rotate with it and a worm gear (28) securely connected to the planetary carrier (30) so as to rotate with it is arranged between the second input shaft (14) and the planetary carrier (30), and **in that** the transmission ratio of the worm gear mechanism (26) is greater than approximately 10 and also the transmission ratio of the planetary gear mechanism (25) from the planetary carrier (30) to the output shaft (15) is selected to be between 2 and 8.

**2.** Actuator according to Claim 1, **characterized in that** the bevel angles ($\beta_1$, $\beta_2$) of the two gear stages have the same pitch direction and the bevel angle ($\beta_1$ or $\beta_2$) of one gear stage is fixed and the bevel angle ($\beta_2$, $\beta_1$) of the other gear stage is calculated from the relationship

$$F_{t1} \cdot \tan \beta_1 + F_{t2} \cdot \beta_2 = 0,$$

$F_{t1}$, $F_{t2}$ being the tangential forces applied to the two planetary wheels (311, 312) and $\beta_1$, $\beta_2$ being the bevel angles in the two gear stages.

**3.** Actuator according to Claim 1 or 2, **characterized in that** the number of teeth of the planetary wheels (311, 312) is fixed such that transmission from the first input shaft (13) to the output shaft (15) preferably takes place in decelerative fashion.

**4.** Actuator according to one of Claims 1 to 3, **characterized in that** the ratio of the diameters of the worm (26) and of the worm gear (28) is selected to be approximately 1.

5. Actuator according to Claim 4, **characterized in that** the planetary carrier (30) is mounted on the output shaft (15) by means of a needle bearing.

6. Actuator according to one of Claims 1 to 5, **characterized in that** the output shaft (15) is supported on the coaxial first input shaft (13) by means of an axial bearing (50) preferably designed as a sliding bearing.

7. Actuator according to Claim 6, **characterized in that** the axial bearing (50) has a ball (51) accommodated in the end face of a shaft (13, 15) and a disc (53) arranged on the end face of the other shaft (15, 13) and resting on the ball (51) in punctiform fashion.

8. Actuator according to Claim 7, **characterized in that** a bearing journal (151) protruding on the end face of the output shaft (15) projects into a coaxial, blind-hole-like recess (46) in the first input shaft (13), **in that** the ball (51) is accommodated in a depression (52) in the bearing journal (151) of the output shaft (15) and the disc (53) is accommodated axially displaceably in the recess (46) of the first input shaft (13) and is supported on one of the threaded pins (54) which can be screwed in the input shaft (13), and **in that** the threaded pin (54) can be locked against further displacement in every displacement position of the disc (53).

9. Actuator according to Claim 8, **characterized in that** the bearing journal (151) of the output shaft (15) is supported by means of at least one needle bearing (47, 48) in the interior of the first input shaft (13), the said input shaft for its part being supported at the housing end by means of a ball bearing (44).

10. Actuator according to one of Claims 1 to 9, **characterized in that** the at least one multi-step planet (31) is mounted on an axle (34), the two ends of which are held in a respective bearing point (36, 37) arranged in the planetary carrier (30), **in that** the two bearing points (36, 37) of the axle (34) are arranged on the free end of a respective bending arm (40; 66), the other end of which is fixed in a spring-elastic manner to the planetary carrier (30) with a prestress directed towards the sun wheels (32, 33) which mesh with the multi-step planet (31), and **in that** a mechanical stop (41) which limits movement of the bending arm (40, 66) directed away from the meshing sun wheels (32, 33) is arranged at the planetary carrier (30).

11. Actuator according to Claim 10, **characterized in that** the bending arm (40) is configured to be curved with an inner bounding edge (401) extending coaxially with the axle of the planetary carrier (30), and **in that** the stop (41) has a centring recess (64) with two inclined side flanks (641, 642) on which the rounded free end of the bending arm (40) lies in linear fashion.

12. Actuator according to Claim 10, **characterized in that** the bending arm (66) is aligned tangentially to the planetary carrier (30).

13. Actuator according to one of Claims 1 to 12, **characterized in that** at least three multi-step planets (31) are arranged on the planetary carrier (30) offset with respect to each other by identical circumferential angles, at least one of the multi-step planets having the radially resilient mounting.

14. Actuator according to one of Claims 1 to 13, in which, instead of the two sun wheels (32, 33), two hollow gears (58, 59) with internal toothing are securely connected to the input and output shafts (13, 15), so as to rotate with them, and mesh in the same way with the planetary wheels (311, 312) of the at least one multi-step planet (31).

15. Actuator according to one of Claims 1 to 14, **characterized in that** each of the two input shafts (13, 14) and the output shaft (15) is assigned a sensor (21, 22, 23) which senses the angle of rotation or the angular velocity of the shaft (13, 14, 15), the output signals from the sensors (21, 22, 23) being fed to a control device (24) for the electric motor (20).

**Revendications**

1. Actionneur destiné à l'intervention de direction en superposition dans un dispositif de direction de véhicule, comprenant un mécanisme de superposition (12) présentant deux arbres d'entrée (13, 14) et un arbre de sortie (15), dans lequel le rapport de transformation entre une modification de l'angle de rotation produite sur le premier arbre d'entrée (13) et la modification de l'angle de rotation produite sur l'arbre de sortie (15) coaxial au premier arbre d'entrée (13) peut être modifié par un moteur électrique (20) accouplé au deuxième arbre d'entrée (14) en fonction de paramètres prédéterminés, par exemple en fonction de la vitesse de rotation du premier arbre d'entrée (13), le mécanisme de superposition (12) possédant un train épicycloïdal à deux étages, modifié (25), qui comprend un porte-satellites (30) possédant lui-même au moins un, de préférence au moins trois, satellites étagés (31), qui sont composés de deux pignons satellites (311, 312) alignés axialement, reliés solidairement entre eux en rotation et qui sont montés rotatifs sur le porte-satellites (30), ainsi que deux roues planétaires (32, 33), l'un des pignons satellites (311) de l'au moins un satellite étagé (31) engrenant avec l'une des roues planétaires (32) et l'autre pignon satellite (312) du satellite étagé (31) engrenant avec l'autre roue planétaire (33), le premier arbre d'entrée (13) étant relié solidairement en rotation avec l'une des roues planétaires (32, 33) et l'arbre de sortie (15) avec l'autre roue planétaire, et le porte-satellites (30) pouvant être entraîné par l'intermédiaire du deuxième arbre d'entrée,

**caractérisé en ce que**

les dents (67, 68) des pignons satellites (311, 312) des satellites étagés (31) et celles des roues planétaires (22, 23) qui engrènent avec ces pignons dans chaque étage du train sont hélicoïdales et les angles d'hélice ($\beta_1$, $\beta_2$) des dents (67, 68) des deux étages du train sont adaptées les uns aux autres de manière que les forces tangentielles ($F_{t1}$, $F_{t2}$) appliquées aux pignons satellites (311, 312) produisent des composantes axiales ($F_{a1}$, $P_{a2}$) qui se compensent mutuellement, entre le deuxième arbre d'entrée (14) et le porte-satellites (30), est disposé un couple à vis sans fin (26) autobloquant comprenant une vis sans fin (27) reliée solidairement en rotation au deuxième arbre d'entrée (14) et une roue à vis sans fin (28) reliée solidairement en rotation au porte-satellites (30), et le rapport de transmission du couple à vis sans fin (26) est choisi supérieur à environ 10 et le rapport de transmission du train épicycloïdal (25), entre le porte-satellites (30) et l'arbre de sortie (15), est choisi compris entre 2 et 8.

2.  Actionneur selon la revendication 1,
    **caractérisé en ce que**
    les angles d'hélice ($\beta_1$, $\beta_2$) des deux étages du train présentent le même sens d'ascendance et l'angle d'hélice ($\beta_1$, respectivement $\beta_2$) de l'un des étages du train est fixé et l'angle d'hélice ($\beta_2$, $\beta_1$) de l'autre étage du train est donné par l'équation :

    $$F_{t1} \cdot \tan\beta_1 + F_{t2} \cdot \tan\beta_2 = 0$$

    où $F_{t1}$, $F_{t2}$ sont les forces tangentielles appliquées aux deux pignons satellites (311, 312) et ($\beta_1$, $\beta_2$) sont les angles d'hélice présents dans les deux étages du train.

3.  Actionneur selon la revendication 1 ou 2,
    **caractérisé en ce que**
    les nombres de dents des pignons satellites (311, 312) sont fixés de manière qu'il y ait un rapport de transmission du premier arbre d'entrée (13) à l'arbre de sortie (15) qui est de préférence une réduction.

4.  Actionneur selon une des revendications 1 à 3,

    **caractérisé en ce que**
    le rapport des diamètres de la vis sans fin (26) et de la roue à vis sans fin (28) est choisi à environ 1.

5.  Actionneur selon la revendication 4,
    **caractérisé en ce que**
    le porte-satellites (30) est monte sur l'arbre de sortie (15) par un roulement à aiguilles.

6.  Actionneur selon une des revendications 1 à 5,
    **caractérisé en ce que**
    l'arbre de sortie (15) prend appui contre le premier arbre d'entrée (13) qui y est coaxial par un palier axial (50) constitué de préférence par un palier lisse.

7.  Actionneur selon la revendication 6,
    **caractérisé en ce que**
    le palier axial (50 présente une bille (51) logée dans la face frontale d'un arbre (13, 15) et un disque (53) disposé contre une face frontale de l'autre arbre (15, 13) et en contact ponctuel avec la bille (51).

8.  Actionneur selon la revendication 7,
    **caractérisé en ce que**
    l'arbre de sortie (15) est engagé par un tourillon (151) qui fait saillie côté frontal dans un évidement coaxial, borgne (46) du premier arbre d'entrée (13), la bille (51) est logée dans un évidement (52) formé dans le tourillon (151) de l'arbre de sortie (15) et le disque (53) est logé en translation axiale dans l'évidement (46) du premier arbre d'entrée (13) et s'appuie contre une tige filetée (54) pouvant être vissée dans l'arbre d'entrée (13), la tige filetée (54) peut être bloquée dans chaque position de translation du disque (53) pour arrêter la translation.

9.  Actionneur sclon la revendication 8,
    **caractérisé en ce que**
    l'arbre de sortie (15) prend appui par son tourillon (151), par l'intermédiaire d'au moins un roulement à aiguilles (47, 48), à l'intérieur du premier arbre d'entrée (13) qui, de son côté, prend appui sur le carter par l'intermédiaire d'un roulement à billes (44).

10. Actionneur selon une des revendications 1 à 9,
    **caractérisé en ce que**
    l'au moins un satellite étage (31) est monté rotatif sur un axe (34) dont les deux extrémités sont logées chacune dans une zone de palier (36, 37) disposée dans le porte-satellites (30), les deux zones de palier (36, 37) de l'axe (34) sont disposées chacune sur l'extrémité libre d'un bras flexible respectif (40 ; 66) dont l'autre extrémité est fixée élastiquement sur le porte-satellites (30) avec une précontrainte dirigée vers les roues planétaires (32, 33) qui engrènent avec les satellites étagés (31), et sur le porte-satellites (30), est disposée une butée mécanique (41) qui limite un mouvement du bras flexible (40, 66) dirigé dans le sens qui s'éloigne des roues planétaires (32, 33) en engrènement.

11. Actionneur selon la revendication 10, **caractérisé en ce que** le bras flexible (40) est réalisé en forme d'arc, avec un bord limite intérieur (401) qui s'étend coaxialement à l'axe du porte-satellites (30) ct **en ce que** la butée (41) présente un évidement de centrage (64) présentant deux flancs latéraux obliques (641, 642) contre lesquels l'extrémité libre arrondie du bras flexible (40) est en contact linéaire.

12. Actionneur selon la revendication 10, **caractérisé en ce que** le bras flexible (66) est orient tangentiellement au porte-satellites (30).

13. Actionneur selon une des revendications 1 à 12, **caractérisé en ce qu'** au moins trois satellites étages (31) sont disposes sur le porte-satellites (30) de façon décalée d'angles circonférentiels égaux, au moins l'un d'eux présentant un palier à débattement élastique radial.

14. Actionneur selon une des revendications 1 à 13, dans lequel, en remplacement des deux roues planétaires (32, 33), deux couronnes à denture intérieure (58, 59) sont reliées solidairement à l'arbre d'entrée et à l'arbre de sortie (13, 15) et engrènent de la même façon avec les pignons satellites (311, 312) de l'au moins un satellite étagé (31).

15. Actionneur selon une des revendications 1 à 14, **caractérisé en ce que** sur chacun des deux arbres d'entrée (13, 14) et sur l'arbre de sortie (15), est disposé un capteur (21, 22, 23) qui capte l'angle de rotation ou la vitesse angulaire de l'arbre (13, 14, 15) et dont les signaux de sortie sont envoyés à un dispositif régulateur (24) qui commande le moteur électrique (20).

Fig.1

Fig. 2

Fig. 3

Fig. 4

Fig.5

Fig.6